# FASCICULE DE BREVET EUROPEEN

(11) **EP 1 013 897 B1**
(45) Date de publication et mention de la délivrance du brevet: **04.05.2005**
(21) Numéro de dépôt: 99403138.3
(22) Date de dépôt: 14.12.1999
(51) Int. Cl.: F01K 23/06, F02C 3/22, F22B 1/18

(54) **Procédé et installation de cogénération d'énérgie électrique et de vapeur d'eau**
Verfahren und Anlage zur gleichzeitigen Erzeugung von elektrischer Energie und Wasserdampf
Process and installation for cogeneration of electrical energy and steam

(30) Priorité: 23.12.1998 FR 9816313
(43) Date de publication de la demande: 28.06.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Lacoste, Christian, 78230 Le Pecq (FR)
(74) Mandataire: Le Moenner, Gabriel

(56) Documents cités:
- WO-A-96/14495
- GB-A- 2 261 225
- US-A- 4 942 734

## Description

La présente invention est relative à un procédé de cogénération d'énergie électrique et de vapeur d'eau, au moyen d'une turbine à gaz et d'une chaudière de récupération de la chaleur des gaz d'échappement de cette turbine à gaz, sur un site industriel dont une unité fournit un sous-produit gazeux contenant du méthane et de l'hydrogène.

L'invention s'applique notamment à la cogénération réalisée sur des sites pétrochimiques, notamment sur le site de raffineries de pétrole.

Actuellement, des unités de cogénération sont fréquemment installées sur les sites pétrochimiques, en raison de leur rendement énergétique élevé. Ces unités comprennent une turbine à gaz dont la chambre de combustion est alimentée en gaz naturel et qui est suivie d'une chaudière de récupération de la chaleur des gaz d'échappement de la turbine, cette chaudière produisant de la vapeur d'eau sous pression.

Pour permettre de faire face aux règlements de plus en plus contraignants concernant les émissions de NOₓ par de telles unités, les fabricants de turbines à gaz proposent des versions fonctionnant avec une combustion en chambre sèche et à faible émission de NOₓ. Ces turbines à gaz sont généralement connues sous la dénomination "Dry Low NOₓ" ou DLN ou sous l'appellation "Dry Low Emission" ou DLE et peuvent être du type dit "Heavy Duty" ou du type dit "Aeroderivative". Un exemple de ces machines est la turbine à gaz GEF6FA DLN, de 70 MW, de la société Général Electric.

Comme il est bien connu, les turbines à gaz DLN ou DLE dérivent leurs propriétés d'une technologie particulière de brûleurs, généralement à combustion étagée, et de moyens de régulation très performants.

Ces turbines à gaz DLN ou DLE apportent toutefois des contraintes sur la composition du gaz combustible qui les alimente. En particulier, ce gaz ne doit généralement pas contenir plus de 5% d'hydrogène (toutes les teneurs en pourcentage dans cette description sont en volume), et parfois même moins, et doit posséder une composition relativement stable.

Il a également été proposé, pour réduire les émissions de NOₓ, d'injecter de l'eau ou de la vapeur d'eau dans la chambre de combustion d'une turbine à gaz de conception classique, c'est-à-dire qui n'est pas de type DLN ou DLE. Cependant, on ne peut atteindre généralement de cette manière les très basses teneurs en NOₓ (25 ppm) prévues par les prochains règlements. De plus, cette technique consomme de très importantes quantités d'eau déminéralisée, pouvant aller jusqu'à plusieurs dizaines de tonnes par heure, qui sont ensuite perdues à l'atmosphère.

Les raffineries et les autres unités pétrochimiques importantes produisent par ailleurs des sous-produits gazeux contenant une proportion variable d'hydrogène (20 à 95%). Selon la demande des unités utilisatrices aval, une partie de l'hydrogène peut être récupérée de manière rentable à partir des sous-produits contenant le plus d'hydrogène (généralement ≥ 50%). Le solde des sous-produits gazeux, qui, dans la plupart des cas, ne peut être revendu, doit être brûlé le plus souvent comme produit fatal dans des chaudières de production de vapeur.

Pour des besoins donnés en vapeur, cette production fatale de vapeur réduit d'autant la taille de l'unité de cogénération qu'il est possible d'installer sur le site, rendant de ce fait cette unité moins rentable, réduisant de surcroît le rendement énergétique global du complexe et empêchant de diminuer davantage le niveau global de CO₂ émis par la chaîne de production de vapeur et d'électricité.

L'invention a pour but de valoriser de manière plus efficace les sous-produits gazeux en améliorant à la fois la protection de l'environnement et le rendement énergétique global du complexe, en réduisant les dépenses en eau, et convenant tout particulièrement à l'exploitation de turbines à faibles émissions de NOx.

A cet effet, l'invention a pour objet un procédé du type précité, caractérisé en ce que :
- on appauvrit en hydrogène ce sous-produit jusqu'à une teneur en hydrogène au plus égale à 5% et de préférence au plus égale à 2%, pour former un gaz combustible majoritairement constitué de méthane,
- on utilise ce gaz combustible pour alimenter la chambre de combustion de la turbine à gaz,
- on utilise au moins une fraction du gaz résiduaire de l'opération d'appauvrissement, enrichi en hydrogène, comme carburant d'une opération de post-combustion à l'entrée de la chaudière de récupération.

Le procédé suivant l'invention peut comporter une ou plusieurs des caractéristiques suivantes, prises isolément ou suivant toutes leurs combinaisons techniquement possibles:
- on utilise une fraction du gaz résiduaire de l'opération d'appauvrissement, enrichi en hydrogène, comme carburant dans une chaudière auxiliaire de production de vapeur;
- le carburant contient plus de 40 % d'hydrogène, typiquement pas plus de 60 % d'hydrogène.
- ledit appauvrissement comprend au moins un traitement dudit sous-produit par perméation sélective;
- la turbine à gaz est du type à combustion en chambre sèche et à faible émission de NOₓ;
- ledit sous-produit gazeux contient 20 à 60% de méthane, 10 à 65% d'hydrogène et d'autres constituants;
- ladite unité est une installation pétrochimique, notamment une raffinerie de pétrole, et le sous-produit gazeux a la composition suivante :
   CH₄ = 30 à 70%
   H₂ = 10 à 40%
   ΣC₂ = 0 à 40%
   divers = 0 à 20%;
- ledit gaz combustible ayant typiquement pour composition :
   CH₄ = 40 à 90%, notamment 50 à 90%
   H₂ = 0 à 5%
   ΣC₂ = 0 à 45%
   divers = 0 à 25%;
- ladite unité est une unité sidérurgique et le sous-produit gazeux est un gaz de cokerie dont la composition est la suivante :
   CH₄ = 20 à 30%
   H₂ = 55 à 65%
   ΣC₂ = 2 à 8%
   N₂ = 1 à 6%
   CO = 2 à 10%
   divers = 0 à 10%;
- ledit gaz combustible ayant typiquement pour composition :
   CH₄ = 60 à 70%
   H₂ = 0 à 5%
   ΣC₂ = 5 à 20%
   N₂ = 5 à 15%
   CO = 5 à 15%
   divers = 0 à 10%.

L'invention a également pour objet une installation de cogénération destinée à la mise en oeuvre d'un tel procédé.

Cette installation, du type comprenant une turbine à gaz et une chaudière de récupération de la chaleur des gaz d'échappement de cette turbine à gaz, comprend : des moyens d'appauvrissement en hydrogène du sous-produit comprimé pour former un gaz combustible; des moyens d'alimentation de la chambre de combustion de la turbine à gaz avec ledit gaz combustible, et des moyens pour alimenter, avec ledit gaz résiduaire des moyens d'appauvrissement, au moins un brûleur de post-combustion agencé à l'entrée de la chaudière de récupération.

L'invention a également pour objet un complexe industriel comprenant une unité industrielle qui fournit un sous-produit gazeux contenant du méthane et de l'hydrogène, et une installation de cogénération telle que définie ci-dessus.

L'expression "contenant du méthane et de l'hydrogène" utilisée ici doit bien entendu s'entendre comme incluant la possibilité de présence d'autres constituants.

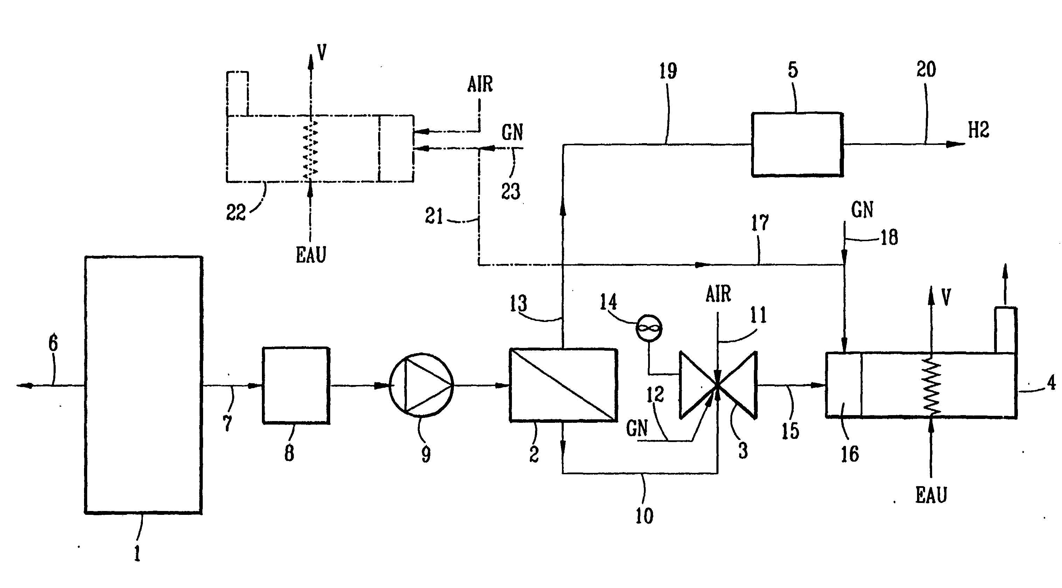

Un exemple de mise en oeuvre de l'invention va maintenant être décrit en regard du dessin annexé, dont la Figure unique représente schématiquement un complexe industriel conforme à l'invention.

Le complexe industriel schématisé à titre d'exemple sur le dessin comprend essentiellement une raffinerie de pétrole 1, un appareil de perméation sélective 2, par exemple à membranes en polyaramide ou en polyimide, une turbine à gaz 3 du type GEF6FA DLN de 70 MW, une chaudière de récupération 4 et un appareil 5 de purification d'hydrogène.

Dans ce qui suit, les pressions sont des pressions absolues, et on désignera chaque courant de fluide par la même référence que la conduite qui le véhicule. De plus, les pourcentages indiqués sont des pourcentages en volume.

De la raffinerie 1 sortent d'une part des produits pétroliers 6, d'autre part des sous-produits gazeux ou "off-gas" 7. La composition de ces sous-produits est typiquement:
CH₄ = 30 à 70%
H₂ = 10 à 40%
ΣC₂ = 0 à 40%
divers = 0 à 20%,
le total faisant 100% et les constituants en C₂ étant essentiellement de l'éthane et de l'éthylène. Le débit de ce gaz 7 est dans cet exemple de l'ordre de 25 000 Nm³/h.

Ces sous-produits sont éventuellement prétraités en 8, par exemple pour en éliminer des impuretés indésirables en aval, telles que le soufre ou le chlore, par tout procédé connu.

Les sous-produits 7 sont ensuite généralement comprimés par un compresseur 9 jusqu'à une pression typiquement de l'ordre de 20 à 60 bars, et introduits de préférence au-dessus du point de rosée dans le perméateur 2. Celui-ci fournit un courant principal 10 de gaz combustible appauvri en hydrogène, qui constitue le refus du perméateur. Ce courant 10 représente typiquement 60 à 80% du débit entrant et a typiquement la composition suivante :
CH₄ = 40 à 90%
H₂ = 0 à 5%
ΣC₂ = 0 à 45%
divers = 0 à 25%,

Ce gaz, riche en méthane, ayant une teneur modérée en éthane et presque dépourvu d'hydrogène, convient pour l'alimentation de la chambre de combustion de la turbine à gaz 3. Celle-ci fonctionne ainsi avec ce gaz comme carburant, de l'air 11 comme comburant, et éventuellement un appoint 12 d'un carburant auxiliaire tel que du gaz naturel.

Le perméat 13 issu du perméateur 2, disponible sous une basse pression de 1 à 6 bars, représentant 20 à 40% du débit entrant, est enrichi avec une teneur en hydrogène supérieure à 45 % et inférieure à 70 %, typiquement inférieur à 60 %. Il a par exemple la composition suivante :
CH₄ = 10 à 45%
H₂ = 45 à 70%
ΣC₂ = 0 à 20%
divers = 0 à 10%.

La turbine à gaz 3 produit d'une part de l'électricité, en 14, et d'autre part des gaz d'échappement 15, lesquels sont envoyés à la chaudière de récupération 4.

La chaudière de récupération 4 comporte à son entrée une chambre de post-combustion 16 équipée de brûleurs (non représentés). Ces derniers sont alimentés d'une part par les gaz d'échappement 15 en tant que comburant, d'autre part, en tant que carburant, par une fraction 17 du perméat 13, éventuellement en mélange avec un autre carburant d'appoint 18 tel que du gaz naturel. La vapeur V produite par la chaudière de récupération 4 est exploitée dans des réactions chimiques, pour le chauffage ou pour la production d'énergie électrique.

Le reste 19 du perméat 13 est utilisé sur le site, éventuellement purifié en 5, par exemple par cryogénie ou par absorption sélective PSA (Pressure Swing Adsorption ou Adsorption Modulée en Pression), pour produire en sortie un flux d'hydrogène 20 à une pureté supérieure à 80 %.

Eventuellement, une fraction 21 du perméat non consommé dans la chaudière 4 peut être brûlée avec de l'air dans une chaudière auxiliaire classique 22 de production de vapeur d'eau, éventuellement en mélange avec un carburant d'appoint 23 tel que du gaz naturel.

Le procédé décrit ci-dessus présente des avantages importants.

D'une part, il permet de produire toute la vapeur par la chaudière 4, c'est-à-dire dans des conditions économiques optimales, avec un ensemble de cogénération de grande capacité. Le rendement énergétique global du complexe 1-3 est ainsi maximisé.

De plus, le procédé permet de satisfaire aux normes les plus contraignantes d'émissions de NOₓ grâce à l'utilisation d'une turbine DLN ou DLE, qui n'induit aucune consommation d'eau déminéralisée pour son fonctionnement à faible NOₓ.

Par ailleurs, le perméat 13 étant au moins aussi riche en hydrogène que les sous-produits des unités pétrochimiques habituellement considérées comme riches en hydrogène, le taux global de récupération d'hydrogène est très favorable et peut justifier la mise en place d'un appareil de purification 5 si le site n'en possède pas encore.

Dans une autre application de l'invention, l'unité 1 est une unité sidérurgique d'ou sort un sous-produit gazeux 7 constitué par du gaz de cokerie. Le tableau ci-dessous indique des compositions typiques de ce gaz, du gaz combustible 10 appauvri en hydrogène et du perméat 13.

| % volume | courant d'entrée 7 | exemple de calcul de perméat 13 | exemple de calcul de gaz combustible 10 |
|---|---|---|---|
| CH₄ | 20 à 30 | 0 à 10 | 60 à 70 |
| H₂ | 55 à 65 | 80 à 95 | 0 à 5 |
| ΣC₂ | 2 à 8 | 0 à 5 | 5 à 20 |
| N₂ | 1 à 6 | 0 à 5 | 5 à 15 |
| CO | 2 à 10 | 0 à 5 | 5 à 15 |
| Quantité récupérée (% volume) | 100 | 65 | 35 |

On remarque que, dans ce cas, c'est le perméat 13 qui constitue le flux majoritaire issu du perméateur 2.

Avec un tel gaz d'alimentation du perméateur, il est souhaitable que le pré-traitement 8 comprenne notamment un dépoussiérage, un débenzolage et un désasphaltage en plus des traitements évoqués plus haut.

En variante, quel que soit le gaz d'alimentation utilisé, le perméateur 2 peut être remplacé par un autre appareil de séparation d'hydrogène, notamment par un appareil PSA. Dans ce cas, il pourra être nécessaire de recomprimer le gaz combustible produit par l'appareil PSA. La séparation par perméation paraît actuellement la plus favorable dans certaines applications, notamment pour le traitement de gaz résiduaires de sites pétrochimiques.

En variante également, quel que soit le gaz d'alimentation utilisé, le même schéma peut être envisagé avec une turbine à gaz classique, c'est-à-dire non DLN ou DLE, pour contribuer à abaisser le niveau d'émission de NOₓ de l'ensemble turbine à gaz-chaudière de récupération, en particulier en combinaison avec une injection d'eau ou de vapeur dans la chambre de combustion de la turbine à gaz.

Comme on le comprend, d'autres sous-produits gazeux peuvent convenir, notamment lorsqu'ils sont riches en méthane et/ou déjà relativement pauvres en hydrogène, ou lorsqu'ils contiennent en majorité du méthane et de l'hydrogène, qui sont facilement séparables.

## Revendications

1. Procédé de cogénération d'énergie électrique et de vapeur d'eau, au moyen d'une turbine à gaz (3) et d'une chaudière (4) de récupération de la chaleur des gaz d'échappement (15) de cette turbine à gaz, sur un site industriel dont une unité (1) fournit un sous-produit gazeux (7) contenant du méthane et de l'hydrogène, **caractérisé en ce que** :
- on appauvrit en hydrogène ce sous-produit (en 2) jusqu'à une teneur en hydrogène au plus égale à 5% en volume et de préférence au plus égale à 2% en volume, pour former un gaz combustible majoritairement constitué de méthane qu'on utilise pour alimenter la chambre de combustion de la turbine à gaz (3), et
- on utilise au moins une fraction (17) du gaz résiduaire (13) de l'opération d'appauvrissement, enrichi en hydrogène, comme carburant d'une opération de post-combustion (en 16) à l'entrée de la chaudière de récupération (4).

2. Procédé suivant la revendication 1, **caractérisé en ce qu'**on utilise une fraction (21) du gaz résiduaire (13) de l'opération d'appauvrissement, enrichi en hydrogène, comme carburant dans une chaudière auxiliaire (22) de production de vapeur.

3. Procédé suivant la revendication 1 ou 2, **caractérisé en ce qu'**on ajoute audit carburant (17, 21) un appoint (18, 23) d'un carburant auxiliaire, notamment de gaz naturel.

4. Le Procédé selon l'une des revendications 1 à 3, **caractérisé en ce que** le carburant (17, 21) contient entre 40 et 60 % en volume d'hydrogène.

5. Procédé suivant l'une des revendications précédentes, **caractérisé en ce que** ledit appauvrissement (2) comprend un traitement dudit sous-produit (7) par perméation sélective.

6. Procédé suivant l'une des revendications précédentes, **caractérisé en ce que** la turbine à gaz (3) est du type à combustion en chambre sèche et à faible émission de NOₓ.

7. Procédé suivant l'une des revendications précédentes, **caractérisé en ce que** ledit sous-produit gazeux contient environ 20 à 60% en volume de méthane, 10 à 65% en volume d'hydrogène et d'autres constituants.

8. Procédé suivant l'une des revendications précédentes, **caractérisé en ce que** ladite unité (1) est une installation pétrochimique, notamment une raffinerie de pétrole, le sous-produit gazeux (7) ayant la composition suivante :
CH₄ = 30 à 70% en volume
H₂ = 10 à 40% en volume
ΣC₂ = 0 à 40% en volume
divers = 0 à 20% en volume.
et ledit gaz combustible (10) ayant pour composition :
CH₄ = 40 à 90% en volume, notamment 50 à 90%
H₂ = 0 à 5% en volume
ΣC₂ = 0 à 45% en volume
divers = 0 à 25% en volume.

9. Procédé suivant l'une des revendications 1-7 , **caractérisé en ce que** ladite unité (1) est une unité sidérurgique, le sous-produit gazeux (7) étant un gaz de cokerie dont la composition est la suivante :
CH₄ = 20 à 30% en volume
H₂ = 55 à 65% en volume
ΣC₂ = 2 à 8% en volume
N₂ = 1 à 6% en volume
CO = 2 à 10% en volume
divers = 0 à 10% en volume.
et ledit gaz combustible (10) ayant pour composition :
CH₄ = 60 à 70% en volume
H₂ = 0 à 5% en volume
ΣC₂ = 5 à 20% en volume
N₂ = 5 à 15% en volume
CO = 5 à 15% en volume
divers = 0 à 10% en volume.

10. Installation de cogénération d'énergie électrique et de vapeur d'eau sur un site industriel dont une unité (1) fournit un sous-produit gazeux (7) contenant du méthane et de l'hydrogène, du type comprenant une turbine à gaz (3) et une chaudière (4) de récupération de la chaleur des gaz d'échappement (15) de cette turbine à gaz, **caractérisée en ce qu'**elle comprend : des moyens (2) d'appauvrissement en hydrogène du sous-produit comprimé pour former un gaz combustible (10); des moyens d'alimentation de la chambre de combustion de la turbine à gaz (3) avec ledit gaz combustible ; et des moyens pour alimenter au moins un brûleur de post-combustion, agencé à l'entrée (16) de la chaudière de récupération (4), avec du gaz résiduaire (17) des moyens d'appauvrissement (2).

11. Installation suivant la revendication 10, **caractérisée en ce qu'**elle comprend des moyens pour alimenter également le brûleur de post-combustion avec un carburant auxiliaire (18), notamment du gaz naturel.

12. Installation suivant l'une des revendications 10 et 11, **caractérisée en ce qu'**elle comprend une chaudière auxiliaire (22) de production de vapeur d'eau, et des moyens pour alimenter les brûleurs de cette chaudière auxiliaire avec du gaz résiduaire (21) des moyens d'appauvrissement (2).

13. Installation suivant la revendication 12, **caractérisée en ce qu'**elle comprend des moyens pour alimenter les brûleurs de la chaudière auxiliaire (22) avec un carburant auxiliaire (23), notamment du gaz naturel.

14. Installation suivant l'une des revendications 10 à 13, **caractérisée en ce que** les moyens d'appauvrissement (2) comprennent un appareil de perméation sélective.

15. Installation suivant l'une des revendications 10 à 14, **caractérisée en ce que** ladite unité (1) est une unité pétrochimique, notamment une raffinerie.

16. Installation suivant l'une des revendications 10 à 14, **caractérisée en ce que** ladite unité (1) est une unité sidérurgique et ledit sous-produit gazeux est un gaz de cokerie.

17. Installation suivant l'une des revendications 10 à 16, **caractérisée en ce que** la turbine à gaz(3) est du type à combustion en chambre sèche et à faible émission de NOₓ.

## Patentansprüche

1. Verfahren zur gleichzeitigen Erzeugung von elektrischer Energie und Wasserdampf mit Hilfe einer Gasturbine (3) und einem Heizkessel (4) zur Rückgewinnung der Wärmeenergie von Abgasen (15) dieser Gasturbine in einer Industrieanlage, in der eine Einheit (1) ein gasförmiges Nebenprodukt (7) zuführt, das Methan und Wasserstoff enthält, **dadurch gekennzeichnet, dass**:
- dieses Nebenprodukt (in 2) an Wasserstoff auf einen Wasserstoffgehalt von höchstens gleich 5 Volumen-% und vorzugsweise höchstens gleich 2 Volumen-% verarmt wird, um ein brennbares Gas zu bilden, das hauptsächlich aus Methan besteht und zum Speisen der Brennkammer der Gasturbine (3) verwendet wird, und
- mindestens ein Teil (17) des restlichen Gases (13) aus dem Verarmungsvorgang, das mit Wasserstoff angereichert ist, als Brennstoff bei einem Nachverbrennungsvorgang (in 16) am Einlass des Rückgewinnungsheizkessels (4) verwendet wird.

2. Verfahren nach Anspruch 1, **dadurch gekennzeichnet, dass** ein Teil (21) des restlichen Gases (13) aus dem Verarmungsvorgang, das mit Wasserstoff angereichert ist, als Brennstoff in einem Hilfsheizkessel (22) zur Dampferzeugung verwendet wird.

3. Verfahren nach Anspruch 1 oder 2, **dadurch gekennzeichnet, dass** dem Brennstoff (17, 21) eine unterstützende Zuleitung (18, 23) eines Hilfsbrennstoffs, insbesondere Erdgas, zugegeben wird.

4. Verfahren nach einem der Ansprüche 1 bis 3, **dadurch gekennzeichnet, dass** der Brennstoff (17, 21) zwischen 40 und 60 Volumen-% Wasserstoff enthält.

5. Verfahren nach einem der vorhergehenden Ansprüche, **dadurch gekennzeichnet, dass** die Verarmung (2) eine Behandlung des Nebenprodukts (7) in Form von selektiver Permeation umfasst.

6. Verfahren nach einem der vorhergehenden Ansprüche, **dadurch gekennzeichnet, dass** die Gasturbine (3) von der Art einer Trockenbrennkammer mit geringer NOₓ-Emission ist.

7. Verfahren nach einem der vorhergehenden Ansprüche, **dadurch gekennzeichnet, dass** das gasförmige Nebenprodukt ungefähr 20 bis 60 Volumen-% Methan, 10 bis 65 Volumen-% Wasserstoff und andere Bestandteile enthält.

8. Verfahren nach einem der vorhergehenden Ansprüche, **dadurch gekennzeichnet, dass** es sich bei der Einheit (1) um eine petrochemische Anlage, insbesondere eine Erdölraffinerie, handelt, das gasförmige Nebenprodukt (7) die folgende Zusammensetzung aufweist:
CH₄ = 30 bis 70 Volumen-%
H₂ = 10 bis 40 Volumen-%
ΣC₂ = 0 bis 40 Volumen-%
diverse = 0 bis 20 Volumen-%
und das brennbare Gas (10) die Zusammensetzung:
CH₄ = 40 bis 90 Volumen-%, insbesondere 50 bis 90 Volumen-%
H₂ = 0 bis 5 Volumen-%
ΣC₂ = 0 bis 45 Volumen-%
diverse = 0 bis 25 Volumen-%
aufweist.

9. Verfahren nach einem der Ansprüche 1 - 7, **dadurch gekennzeichnet, dass** es sich bei der Einheit (1) um eine Eisenhütteneinheit handelt, das gasförmige Nebenprodukt (7) ein Kokereigas ist, dessen Zusammensetzung sich folgendermaßen gestaltet:
CH₄ = 20 bis 30 Volumen-%
H₂ = 55 bis 65 Volumen-%
ΣC₂ = 2 bis 8 Volumen-%
N₂ = 1 bis 6 Volumen-%
CO = 2 bis 10 Volumen-%
diverse = 0 bis 10 Volumen-%
und das brennbare Gas (10) die Zusammensetzung:
CH₄ = 60 bis 70 Volumen-%
H₂ = 0 bis 5 Volumen-%
ΣC₂ = 5 bis 20 Volumen-%
N₂ = 5 bis 15 Volumen-%
CO = 5 bis 15 Volumen-%
diverse = 0 bis 10 Volumen-%
aufweist.

10. Anlage zur gleichzeitigen Erzeugung von elektrischer Energie und Wasserdampf in einer Industrieanlage, in der eine Einheit (1) ein gasförmiges Nebenprodukt (7) zuführt, das Methan und Wasserstoff enthält, von der Art, die eine Gasturbine (3) und einen Heizkessel (4) zur Rückgewinnung der Wärmeenergie von Abgasen (15) dieser Gasturbine umfasst, **dadurch gekennzeichnet, dass** sie Folgendes umfasst: Mittel (2) zum Verarmen des verdichteten Nebenprodukts an Wasserstoff, um ein brennbares Gas (10) zu bilden; Mittel zur Speisung der Brennkammer der Gasturbine (3) mit dem brennbaren Gas und Mittel zum Speisen mindestens eines Nachverbrennungsbrenners, der am Einlass (16) des Rückgewinnungsheizkessels (4) eingerichtet ist, mit dem restlichen Gas (17) aus den Verarmungsmitteln (2).

11. Anlage nach Anspruch 10, **dadurch gekennzeichnet, dass** sie Mittel zum Speisen des Nachverbrennungsbrenners ebenfalls mit einem Hilfsbrennstoff (18), insbesondere Erdgas, umfasst.

12. Anlage nach einem der Ansprüche 10 und 11, **dadurch gekennzeichnet, dass** sie einen Hilfsheizkessel (22) zur Produktion von Wasserdampf und Mittel zum Speisen der Brenner dieses Hilfsheizkessels mit dem restlichen Gas (21) aus den Verarmungsmitteln (2) umfasst.

13. Anlage nach Anspruch 12, **dadurch gekennzeichnet, dass** sie Mittel zum Speisen der Brenner des Hilfsheizkessels (22) mit einem Hilfsbrennstoff (23), insbesondere Erdgas, umfasst.

14. Anlage nach einem der Ansprüche 10 bis 13, **dadurch gekennzeichnet, dass** die Verarmungsmittel (2) ein Gerät zur selektiven Permeation umfassen.

15. Anlage nach einem der Ansprüche 10 bis 14, **dadurch gekennzeichnet, dass** es sich bei der Einheit (1) um eine petrochemische Einheit, insbesondere eine Raffinerie, handelt.

16. Anlage nach einem der Ansprüche 10 bis 14, **dadurch gekennzeichnet, dass** es sich bei der Einheit (1) um eine Eisenhütteneinheit handelt und das gasförmige Nebenprodukt ein Kokereigas ist.

17. Anlage nach einem der Ansprüche 10 bis 16, **dadurch gekennzeichnet, dass** die Gasturbine (3) von der Art einer Trockenbrennkammer mit geringer NOₓ-Emission ist.

## Claims

1. Process for the cogeneration of electrical power and steam by means of a gas turbine (3) and a boiler (4) for recovering the heat from the exhaust gases (15) output by this gas turbine, on an industrial site, one unit (1) of which delivers a gaseous by-product (7) containing methane and hydrogen, **characterized in that**:
- this by-product is depleted of hydrogen (at 2) down to a hydrogen content of at most 5% by volume and preferably at most 2% by volume, in order to form a combustible gas predominantly consisting of methane, which is used to feed the combustion chamber of the gas turbine (3); and
- at least one fraction (17) of the hydrogen-enriched waste gas (13) coming from the depletion operation is used as fuel for a post-combustion operation (at 16) at the inlet of the waste-heat boiler (4).

2. Process according to Claim 1, **characterized in that** a fraction (21) of the hydrogen-enriched waste gas (13) coming from the depletion operation is used as fuel in an auxiliary boiler (22) for steam production.

3. Process according to Claim 1 or 2, **characterized in that** auxiliary fuel, especially natural gas, is injected (at 18, 23) into the said fuel (17, 21).

4. Process according to one of Claims 1 to 3, **characterized in that** the fuel (17, 21) contains between 40 and 60% hydrogen by volume.

5. Process according to one of the preceding claims, **characterized in that** the said depletion (2) comprises a permselective treatment of the said by-product (7).

6. Process according to one of the preceding claims, **characterized in that** the gas turbine (3) is of the "dry chamber" combustion type with a low emission of NOₓ.

7. Process according to one of the preceding claims, **characterized in that** the said gaseous by-product contains about 20 to 60% methane by volume, 10 to 65% hydrogen by volume and other constituents.

8. Process according to one of the preceding claims, **characterized in that** the said unit (1) is a petrochemical plant, especially an oil refinery, the gaseous by-product (7) having the following composition:
CH₄ = 30 to 70% by volume;
H₂ = 10 to 40% by volume;
ΣC₂ = 0 to 40% by volume;
others = 0 to 20% by volume;
and the said combustible gas (10) having as composition:
CH₄ = 40 to 90%, especially 50 to 90%, by volume;
H₂ = 0 to 5% by volume;
ΣC₂ = 0 to 45% by volume;
others = 0 to 25% by volume.

9. Process according to one of Claims 1 to 7, **characterized in that** the said unit (1) is a steelmaking unit, the gaseous by-product (7) being a coking gas, the composition of which is the following:
CH₄ = 20 to 30% by volume;
H₂ = 55 to 65% by volume;
ΣC₂ = 2 to 8% by volume;
N₂ = 1 to 6% by volume;
CO = 2 to 10 % by volume;
others = 0 to 10% by volume;
and the said combustible gas (10) having as composition:
CH₄ = 60 to 70% by volume;
H₂ = 0 to 5% by volume;
ΣC₂ = 5 to 20% by volume;
N₂ = 5 to 15% by volume;
CO = 5 to 15% by volume;
others = 0 to 10% by volume.

10. Plant for the cogeneration of electrical power and steam on an industrial site, one unit (1) of which delivers a gaseous by-product (7) containing methane and hydrogen, of the type comprising a gas turbine (3) and a boiler (4) for recovering the heat from the exhaust gases (15) from this gas turbine, **characterized in that** it comprises: means (2) for depleting the compressed by-product of hydrogen, so as to form a combustible gas (10); means for feeding the combustion chamber of the gas turbine (3) with the said combustible gas; and means for feeding at least one post-combustion burner, placed at the inlet (16) of the waste-heat boiler (4), with waste gas (17) coming from the depleting means (2).

11. Plant according to Claim 10, **characterized in that** it includes means for also feeding the post-combustion burner with an auxiliary fuel (18), especially natural gas.

12. Plant according to either of Claims 10 and 11, **characterized in that** it includes an auxiliary boiler (22) for producing steam, and means for feeding the burners of this auxiliary boiler with waste gas (21) coming from the depleting means (2).

13. Plant according to Claim 12, **characterized in that** it includes means for feeding the burners of the auxiliary boiler (22) with an auxiliary fuel (23), especially natural gas.

14. Plant according to one of Claims 10 to 13, **characterized in that** the depleting means (2) comprise a permselective apparatus.

15. Plant according to one of Claims 10 to 14, **characterized in that** the said unit (1) is a petrochemical unit, especially a refinery.

16. Plant according to one of Claims 10 to 14, **characterized in that** the said unit (1) is a steel making unit and the said gaseous by-product is a coking gas.

17. Plant according to one of Claims 10 to 16, **characterized in that** the gas turbine (3) is of the dry-chamber combustion type with low emission of NOₓ.
